# EUROPEAN PATENT APPLICATION

(11) **EP 4 482 072 A1**
(43) Date of publication of application: **25.12.2024**
(21) Application number: 23752396.4
(22) Date of filing: 09.02.2023
(51) Int. Cl.: H04L 5/00

(54) **DATA SENDING METHOD, DATA RECEIVING METHOD AND RELATED DEVICE**

(30) Priority: 14.02.2022 CN 202210135584
(71) Applicant: VIVO MOBILE COMMUNICATION CO., LTD., Dongguan, Guangdong 523863 (CN)
(72) Inventor: WU, Kai, Dongguan, Guangdong 523863 (CN); WANG, Lihui, Dongguan, Guangdong 523863 (CN); CHEN, Xiaohang, Dongguan, Guangdong 523863 (CN); MO, Yitao, Dongguan, Guangdong 523863 (CN)
(74) Representative: Lavoix
(86) International application number: PCT/CN2023/075181
(87) International publication number: WO 2023/151616

(57) **Abstract**

This application discloses a data sending method, a data receiving method, and a related device, and belongs to the field of communication technologies. The data sending method in embodiments of this application includes the following: A terminal performs a first operation. The terminal sends, in a case that the terminal is in an idle state or an inactive state, target data on a first bandwidth part BWP based on the first operation. The first BWP is an initial uplink BWP configured by a network side device for a reduced capability terminal, and the first operation includes at least one of the following: mapping between a first synchronization signal block SSB and a configured grant physical uplink shared channel; determining, based on a target object, whether a timing advance used by the configured grant physical uplink shared channel is valid, where the target object is a second SSB or a target tracking reference signal; and determining a target control resource set used for sending the target data, where the target control resource set is a control resource set associated with dedicated search space used for monitoring a physical downlink control channel PDCCH.

## Description

### CROSS-REFERENCE TO RELATED APPLICATIONS

This application claims priority to Chinese Patent Application No. 202210135584.8, filed in China on February 14, 2022, which is incorporated herein by reference in its entirety.

### TECHNICAL FIELD

This application relates to the field of communication technologies, and in particular, to a data sending method, a data receiving method, and a related device.

### BACKGROUND

With the development of communication technologies, in a communication system, a network side device usually needs to configure an initial (initial) uplink (Uplink, UL) bandwidth part (Bandwidth Part, BWP). Further, the network side device may further additionally configure a separate initial uplink bandwidth part (separate initial UL BWP) for a reduced capability terminal. To reduce signaling overheads, usually, the terminal may perform small data transmission on the initial UL BWP. However, whether the reduced capability terminal can perform small data transmission on the separate initial UL BWP is still in discussion.

### SUMMARY

Embodiments of this application provide a data sending method, a data receiving method, and a related device, to implement that a reduced capability terminal performs small data transmission on a separate initial UL BWP.

According to a first aspect, a data sending method is provided. The method includes the following:
A terminal performs a first operation.

The terminal sends, in a case that the terminal is in an idle state or an inactive state, target data on a first bandwidth part BWP based on the first operation.

The first BWP is an initial uplink BWP configured by a network side device for a reduced capability terminal, and the first operation includes at least one of the following:
mapping between a first synchronization signal block SSB and a configured grant physical uplink shared channel;
determining, based on a target object, whether a timing advance used by the configured grant physical uplink shared channel is valid, where the target object is a second SSB or a target tracking reference signal; and
determining a target control resource set used for sending the target data, where the target control resource set is a control resource set associated with dedicated search space for monitoring a physical downlink control channel PDCCH.

According to a second aspect, a data receiving method is provided. The method includes the following:
A network side device performs a first operation.

The network side device receives target data from a terminal on a first bandwidth part BWP based on the first operation.

The terminal is in an idle state or an inactive state, the first BWP is an initial uplink BWP configured by the network side device for a reduced capability terminal, and the first operation includes at least one of the following:
mapping between a first synchronization signal block SSB and a configured grant physical uplink shared channel;
determining, based on a target object, whether a timing advance used by the configured grant physical uplink shared channel is valid, where the target object is a second SSB or a target tracking reference signal; and
determining a target control resource set used for sending the target data, where the target control resource set is a control resource set associated with dedicated search space for monitoring a physical downlink control channel PDCCH.

According to a third aspect, a data sending apparatus is provided. The apparatus includes:
a first performing module, configured to perform a first operation; and
a sending module, configured to send, in a case that a data sending apparatus is in an idle state or an inactive state, target data on a first bandwidth part BWP based on the first operation.

The first BWP is an initial uplink BWP configured by a network side device for a reduced capability terminal, and the first operation includes at least one of the following:
mapping between a first synchronization signal block SSB and a configured grant physical uplink shared channel;
determining, based on a target object, whether a timing advance used by the configured grant physical uplink shared channel is valid, where the target object is a second SSB or a target tracking reference signal; and
determining a target control resource set used for sending the target data, where the target control resource set is a control resource set associated with dedicated search space for monitoring a physical downlink control channel PDCCH.

According to a fourth aspect, a data receiving apparatus is provided. The apparatus includes:
a second performing module, configured to perform a first operation; and
a receiving module, configured to receive target data from a terminal on a first bandwidth part BWP based on the first operation.

The terminal is in an idle state or an inactive state, the first BWP is an initial uplink BWP configured by the network side device for a reduced capability terminal, and the first operation includes at least one of the following:
mapping between a first synchronization signal block SSB and a configured grant physical uplink shared channel;
determining, based on a target object, whether a timing advance used by the configured grant physical uplink shared channel is valid, where the target object is a second SSB or a target tracking reference signal; and
determining a target control resource set used for sending the target data, where the target control resource set is a control resource set associated with dedicated search space for monitoring a physical downlink control channel PDCCH.

According to a fifth aspect, a terminal is provided. The terminal includes a processor and a memory. The memory stores a program or instructions that can run on the processor. The program or the instructions, when being executed by the processor, implement the steps of the method according to the first aspect.

According to a sixth aspect, a terminal is provided. The terminal includes a processor and a communication interface. The processor is configured to perform a first operation. The communication interface is configured to send, in a case that the terminal is in an idle state or an inactive state, target data on a first bandwidth part BWP based on the first operation. The first BWP is an initial uplink BWP configured by a network side device for a reduced capability terminal, and the first operation includes at least one of the following: mapping between a first synchronization signal block SSB and a configured grant physical uplink shared channel; determining, based on a target object, whether a timing advance used by the configured grant physical uplink shared channel is valid, where the target object is a second SSB or a target tracking reference signal; and determining a target control resource set used for sending the target data, where the target control resource set is a control resource set associated with dedicated search space for monitoring a physical downlink control channel PDCCH.

According to a seventh aspect, a network side device is provided. The network side device includes a processor and a memory. The memory stores a program or instructions that can run on the processor. The program or the instructions, when being executed by the processor, implement the steps of the method according to the second aspect.

According to an eighth aspect, a network side device is provided. The device includes a processor and a communication interface. The processor is configured to perform a first operation. The communication interface is configured to receive target data from a terminal on a first bandwidth part BWP based on the first operation. The terminal is in an idle state or an inactive state, the first BWP is an initial uplink BWP configured by the network side device for a reduced capability terminal, and the first operation includes at least one of the following: mapping between a first synchronization signal block SSB and a configured grant physical uplink shared channel; determining, based on a target object, whether a timing advance used by the configured grant physical uplink shared channel is valid, where the target object is a second SSB or a target tracking reference signal; and determining a target control resource set used for sending the target data, where the target control resource set is a control resource set associated with dedicated search space for monitoring a physical downlink control channel PDCCH.

According to a ninth aspect, a communication system is provided. The system includes: a terminal and a network side device, where the terminal can be configured to perform the steps of the data sending method according to the first aspect, and the network side device can be configured to perform the steps of the data receiving method according to the second aspect.

According to a tenth aspect, a readable storage medium is provided. The readable storage medium stores a program or instructions. The program or the instructions, when being executed by a processor, implement the steps of the method according to the first aspect, or implement the steps of the method according to the second aspect.

According to an eleventh aspect, a chip is provided. The chip includes a processor and a communication interface. The communication interface is coupled to the processor. The processor is configured to run a program or instructions, to implement the steps of the method according to the first aspect, or implement the steps of the method according to the second aspect.

According to a twelfth aspect, a computer program/program product is provided. The computer program/program product is stored in a storage medium. The computer program/program product is executed by at least one processor, to implement the steps of the method according to the first aspect, or implement the steps of the method according to the second aspect.

In embodiments of this application, the first operation is performed by the terminal. The terminal sends, in a case that the terminal is in an idle state or an inactive state, the target data on the first bandwidth part BWP based on the first operation. The first BWP is an initial uplink BWP configured by a network side device for a reduced capability terminal, and the first operation includes at least one of the following: mapping between the first synchronization signal block SSB and the configured grant physical uplink shared channel; determining, based on a target object, whether a timing advance used by the configured grant physical uplink shared channel is valid, where the target object is a second SSB or a target tracking reference signal; and determining the target control resource set used for sending the target data, where the target control resource set is the control resource set associated with the dedicated search space for monitoring the physical downlink control channel PDCCH. In this way, the terminal may implement CG-scheduling based small data transmission in an RRC inactive or idle state, to reduce power consumption of the terminal and saving signaling overheads.

### BRIEF DESCRIPTION OF THE DRAWINGS

FIG. 1 is a schematic diagram of a network structure to which an embodiment of this application is applicable;
FIG. 2 is a schematic flowchart of a data sending method according to an embodiment of this application;
FIG. 3 is a schematic flowchart of a data receiving method according to an embodiment of this application;
FIG. 4 is a diagram of a structure of a data sending apparatus according to an embodiment of this application;
FIG. 5 is a diagram of a structure of a data receiving apparatus according to an embodiment of this application;
FIG. 6 is a diagram of a structure of a communication device according to an embodiment of this application;
FIG. 7 is a diagram of a structure of a terminal according to an embodiment of this application; and
FIG. 8 is a diagram of a structure of a network side device according to an embodiment of this application.

### DETAILED DESCRIPTION

The technical solutions in embodiments of this application are clearly described in the following with reference to the accompanying drawings in the embodiments of this application. Apparently, the described embodiments are merely some rather than all of the embodiments of this application. All other embodiments obtained by a person skilled in the art based on the embodiments of this application fall within the protection scope of this application.

The terms "first", "second", and the like in the specification and claims of this application are used to distinguish between similar objects, but are not necessarily used to describe a specific order or sequence. It should be understood that terms used in such a way are interchangeable under proper conditions, so that the embodiments of this application can be implemented in an order different from the order shown or described herein. In addition, in the specification and the claims, "and/or" represents at least one of the connected objects, and the character "/" usually indicates an "or" relationship between the associated objects.

It should be noted that the technologies described in the embodiments of this application are not limited to a long term evolution (Long Term Evolution, LTE)/LTE-advanced (LTE-Advanced, LTE-A) system, and may further be used in other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in the embodiments of this application may usually be interchangeably used, and the described technologies may be used in the systems and radio technologies mentioned above, and may also be used in another system and radio technology. The following descriptions describe a new radio (New Radio, NR) system for example purposes, and NR terms are used in most of the following descriptions, but the technologies may also be applied to applications other than an NR system application, such as a sixth generation (6th Generation, 6G) communication system.

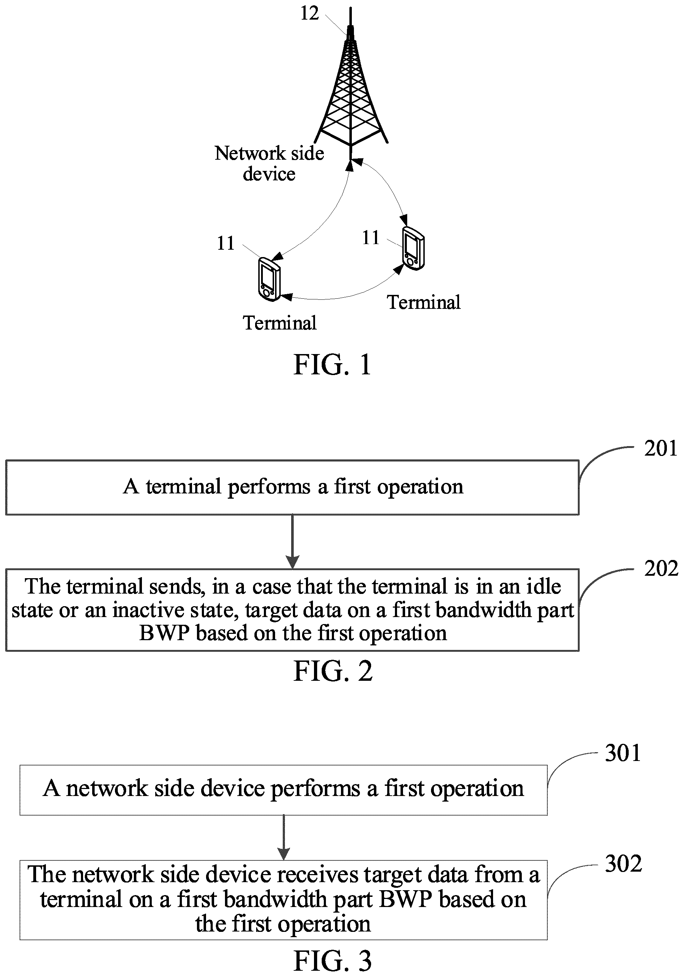

FIG. 1 is a block diagram of a wireless communication system to which an embodiment of this application is applicable. The wireless communication system includes a terminal 11 and a network side device 12. The terminal 11 may be a terminal side device, for example, a mobile phone, a tablet computer (Tablet Personal Computer), a laptop computer (Laptop Computer) (or referred to as a notebook computer), a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart household (a household device that has a wireless communication function, for example, a refrigerator, a television, a washing machine, or furniture), a game console, a personal computer (personal computer, PC), a teller machine, or a self-service machine. The wearable device includes: a smart watch, a smart band, a smart headphone, smart glasses, smart jewelry (a smart wristband, a smart bracelet, a smart ring, a smart necklace, a smart anklet, a smart anklet, and the like), a smart wristband, smart clothing, and the like. It should be noted that, a specific type of the terminal 11 is not limited in the embodiments of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmitting Receiving Point, TRP), or another appropriate term in the field. As long as the same technical effect is achieved, the base station is not limited to a specific technology vocabulary. It should be noted that, only a base station in an NR system is used as an example for description in the embodiments of this application, but a specific type of the base station is not limited.

For convenience of understanding, some content in the embodiments of this application is described in the following.

### I. Random access (Random Access Channel, RACH) procedure

Usually, the random access procedure includes a contention random access procedure and a non-contention random access procedure.

In a 4-step (4-step) contention random access procedure, a terminal first sends a message 1 (msgl) to a network side device, where the msg1 includes a preamble (Preamble). The network side device sends msg2 after detecting the preamble. The msg2 may also be referred to as a random access response (Andom Access Response, RAR) message. The msg2 includes numbers of preambles detected by a network and an uplink radio resource allocated to the terminal to send msg3. After receiving the msg2, the terminal confirms that at least one of the numbers of the preambles carried in the msg2 is consistent with a number of the preamble sent by the terminal, and sends, based on the resource indicated by the RAR, the msg3 including contention resolution information. After receiving the msg3, the network side device sends msg4 including the contention resolution information. The UE receives the msg4 and confirms that the contention resolution information is consistent with that sent by the UE in the msg3. That is, the 4-step random access is completed.

Optionally, the network side device includes, in the RAR, uplink grant (UL grant) information for indicating information such as msg3 physical uplink shared channel (Physical Uplink Shared Channel, PUSCH) scheduling information, a random access preamble identifier (RACH preamble ID, RAPID), a temporary cell-radio network temporary identifier (Temporary cell-Radio Network Temporary Identifier, TC-RNTI), and a timing advance (Timing Advance, TA). If the network side device does not receive the msg3 PUSCH, the network side device may schedule retransmission of the msg3 PUSCH on a physical downlink control channel (Physical Downlink Control Channel, PDCCH) scrambled by the TC-RNTI.

For the contention random access procedure, different terminals randomly select a preamble for transmission. In this way, the different terminals may select a same preamble on a same time-frequency radio resource for sending. This case may be understood as a preamble conflict between the terminals. In this case, the different terminals receive a same RAR. In this case, the different terminals transmit an msg3 PUSCH based on scheduling information in the RAR UL grant. Because repeated transmission of the msg3 PUSCH is not currently supported, the network side device can only resolve a PUSCH transmitted by one UE on one msg3 PUSCH scheduling resource. Therefore, the network side device includes, in msg4, contention resolution information received in msg3. If contention resolution information in the msg4 received by the terminal matches the contention resolution information sent by the terminal in the msg3 PUSCH, the terminal considers that contention resolution is successful. If the two do not match each other, it is considered that contention resolution is unsuccessful.

Optionally, if contention resolution is unsuccessful, the UE re-selects a RACH sending resource, performs PRACH sending, and performs a next random access attempt.

Optionally, a 2-step (2-step) random access procedure is as follows: First, the terminal sends a message A (MsgA) to the network side device, and then the network side device sends a message B (MsgB) to the terminal after receiving the MsgA. If the terminal does not receive the MsgB within specific time, the terminal accumulates quantities of times counted by counters counting a quantity of times the MsgA is sent and retransmits the MsgA. The terminal switches from the 2-step random access procedure to the 4-step random access procedure if the counter counting the quantity of times the MsgA is sent reaches a specific threshold. The MsgA includes an MsgA preamble part and an MsgA PUSCH part. The preamble part is sent on a random access occasion (RACH Occasion, RO) for the 2-step RACH. The PUSCH part is sent on a resource for sending an MsgA PUSCH resource associated with the RO and MsgA preamble. The MsgA PUSCH resource is a set of PUSCH resources configured with respect to each physical random access channel (Physical Random Access Channel, PRACH) slot (slot), including a time-frequency resource and a demodulation reference signal (Demodulation Reference Signal, DMRS) resource.

### Π. Small data transmission

A characteristic of efficient small data transmission is that for a terminal in a non-connected state, excessive signaling overheads caused by radio resource control (Radio Resource Control, RRC) state transition and an RRC connection establishment process are avoided, and an objective of small data transmission is completed through an extremely simple signaling process. The terminal in a non-connected state may include a terminal in an idle (IDLE) state and an inactive (inactive) state.

A characteristic of the small data transmission is that a current data radio bearer (Data Radio Bearer, DRB) of a terminal is in a suspended state rather than a released state. Therefore, the terminal may resume the DRB before sending a resume request (ResumeRequest) message, and then piggyback small data through RRC signaling. In this case, the terminal may transmit data on the DRB just like a terminal in a connected (CONNECTED) state. In this way, state transition is avoided, and an objective of efficient small data transmission is achieved with less signaling overheads.

Because DRB transmission is used for small data transmission, access stratum (Access Stratum, AS) security is already activated. Therefore, small data transmission may be used to perform necessary security protection on data, for example, perform operations such as data encryption and integrity protection. From a security perspective, since the terminal may already move to another base station when the terminal is in the suspended state, a security key used by the terminal to re-transmit a packet needs to be updated in this case. An update method is to perform an update operation on a next key based on a parameter, for calculating a next hop key, that is provided by the network side device to the terminal when the terminal enters the suspended state.

To-be-transmitted data of small data transmission is carried on a dedicated traffic channel (Dedicated Traffic Channel, DTCH), and is multiplexed with an uplink RRC connection resume request (RRCConnectionResumeRequest) message for transmission. Similarly, if there is a reply downlink message, the reply downlink message may also be carried on the DTCH, and may be multiplexed with a downlink RRC connection release (RRCConnectionRelease) message for transmission. Data in both an uplink and a downlink is encrypted, and an encryption operation is performed by using an updated next key.

It should be understood that the following several cases may be included for small data transmission:
performing transmission on an Msg3 PUSCH based on a 4-step RACH procedure;
performing transmission on an MsgA PUSCH based on a 2-step RACH procedure; and
performing transmission on a configured grant (Configured Grant, CG) scheduled PUSCH resource configured in an RRC inactive state.

Small data transmission in the 2-step RACH procedure and the 4-step RACH procedure may be referred to as RACH-based small data transmission, and small data transmission based on the CG-scheduled PUSCH is referred to as CG-based small data transmission.

Currently, small data transmission in the RRC inactive state is only supported on an initial UL BWP. When a separate initial UL BWP is additionally configured for a reduced capability terminal in a specific cell, whether small data transmission can be performed on the BWP has not been discussed. Therefore, a data sending method of this application is provided.

The data sending method provided in embodiments of this application is described in detail in the following by using some embodiments and application scenarios thereof with reference to the accompanying drawings.

Refer to FIG. 2. An embodiment of this application provides a data sending method. As shown in FIG. 2, the data sending method includes the following steps.

Step 201: A terminal performs a first operation.

Step 202: The terminal sends, in a case that the terminal is in an idle state or an inactive state, target data on a first bandwidth part BWP based on the first operation.

The first BWP is an initial uplink BWP configured by a network side device for a reduced capability (RedCap) terminal, and the first operation includes at least one of the following:
mapping between a first synchronization signal block (Synchronization Signal and PBCH block, SSB) and a configured grant physical uplink shared channel;
determining, based on a target object, whether a timing advance (Timing Advance, TA) used by the configured grant physical uplink shared channel is valid, where the target object is a second SSB or a target tracking reference signal (Tracking Reference Signal, TRS); and
determining a target control resource set (Control Resource Set, CORESET) used for sending the target data, where the target control resource set is a control resource set associated with dedicated (Dedicated) search space (search space, SS) for monitoring a physical downlink control channel (Physical Downlink Control Channel, PDCCH).

In this embodiment of this application, the reduced capability terminal may be referred to as RedCap UE. The first BWP may also be understood as an initial UL BWP, which may also be referred to as a separate initial UL BWP, provided by initialUplinkBWP in an uplink configuration common reduced capability system information block (UplinkConfigCommonRedCapSIB (System Information Block)). In addition, an initial downlink (Downlink, DL) BWP provided by initialDownlinkBWP in a downlink configuration common reduced capability system information block (DownlinkConfigCommonRedCapSIB) may be referred to as a separate initial DL BWP.

It should be understood that, in a case that the network side device additionally configures a separate initial UL BWP for the RedCap UE, two initial uplink BWPs coexist in one cell, that is, an initial UL BWP and the separate initial UL BWP. The RedCap UE determines, through the first operation, at least one of mapping between the SSB and the CG PUSCH, validity of a timing advance used by the CG PUSCH, and a target control resource set for sending the target data, so that the RedCap UE can support CG-scheduling based small data transmission in an RRC inactive or idle state, that is, perform small data sending on a separate initial UL BWP. In this way, power consumption of the RedCap UE can be reduced and signaling overheads can be saved.

In this embodiment of this application, the first operation is performed by the terminal. The terminal sends, in a case that the terminal is in an idle state or an inactive state, target data on a first bandwidth part BWP based on the first operation. The first BWP is an initial uplink BWP configured by a network side device for a reduced capability terminal, and the first operation includes at least one of the following: mapping between a first synchronization signal block SSB and a configured grant physical uplink shared channel; determining, based on a target object, whether a timing advance used by the configured grant physical uplink shared channel is valid, where the target object is a second SSB or a target tracking reference signal; and determining a target control resource set used for sending the target data, where the target control resource set is a control resource set associated with dedicated search space for monitoring a physical downlink control channel PDCCH. In this way, the terminal may implement CG-scheduling based small data transmission in an RRC inactive or idle state, to reduce power consumption of the terminal and saving signaling overheads.

Optionally, in some embodiments, the first SSB meets at least one of the following:

The first SSB is a cell defining (Cell Defining, CD) SSB or a non-cell defining (Cell Defining, NCD) SSB; and
the first SSB is determined according to a first preset rule.

In this embodiment of this application, the cell defining SSB may also be referred to as a CD-SSB, and a non-cell defining SSB may also be referred to as an NCD-SSB. The CD-SSB is an SSB used by the terminal to obtain a system information block 1 (System Information Block 1, SIB1), or the CD-SSB is an SSB that provides a control resource set for type 0 (Type 0) PDCCH common search space (Common Search Space, CSS). The NCD-SSB is an SSB not used by the terminal to obtain the SIB1, or the NCD-SSB is an SSB that does not provide a control resource set for the Type 0 PDCCH CSS.

It should be understood that, that the first SSB is a CD-SSB or an NCD-SSB may be understood as follows: The first SSB is the CD-SSB by default, or the first SSB is the NCD-SSB by default.

It should be noted that, when the first SSB is the CD-SSB, the RedCap UE performs small data sending independently of the NCD-SSB, and it is required that the RedCap UE further use the CD-SSB. Mapping based on the first synchronization signal block SSB and the configured grant physical uplink shared channel is similar to mapping of the CD-SSB to a RO on the separate initial UL BWP.

Optionally, the first preset rule includes at least one of the following:
determining the first SSB depending on whether the network side device configures to use a cell defining SSB;
determining the first SSB depending on whether the network side device configures to use a non-cell defining SSB;
determining the first SSB depending on whether the network side device configures a non-cell defining SSB on the first BWP; and
determining the first SSB depending on whether the network side device configures a first object on the first BWP.

The first object includes at least one of the following: type 2 common search space CSS, type 2A CSS, the terminal monitoring CSS in which a PDCCH scrambled by a paging-radio network temporary identifier (Paging-Radio Network Temporary Identity, P-RNTI) is located, and the terminal monitoring CSS in which a PDCCH scrambled by a paging early indication-radio network temporary identifier (Paging Early Indication-Radio Network Temporary Identity, PEI-RNTI) is located.

In this embodiment of this application, in a case that the first SSB is determined depending on whether the network side device uses a cell defining SSB, if the network side device configures to use the cell defining SSB, it is determined that the first SSB is the cell defining SSB; otherwise, it is determined that the first SSB is a non-cell defining SSB. In a case that the first SSB is determined depending on whether the network side device uses a non-cell defining SSB, if the network side device configures to use the non-cell defining SSB, it is determined that the first SSB is the non-cell defining SSB; otherwise, it is determined that the first SSB is a cell defining SSB.

Optionally, in a case that the first preset rule includes determining the first SSB depending on whether the network side device configures a non-cell defining SSB on the first BWP, the first SSB meets the following:

In a case that the non-cell defining SSB is configured on the first BWP, the first SSB is the non-cell defining SSB; or
in a case that the non-cell defining SSB is not configured on the first BWP, the first SSB is a cell defining SSB.

In this embodiment of this application, if the network side device configures a non-cell defining SSB on the first BWP, it may be understood as that the NCD-SSB being sent on the separate initial DL BWP is indicated to the terminal.

Optionally, in a case that the first preset rule includes determining the first SSB depending on whether the network side device configures a first object on the first BWP, the first SSB meets the following:

In a case that the first object is configured on the first BWP, the first SSB is a non-cell defining SSB; or
in a case that the first object is not configured on the first BWP, the first SSB is a cell defining SSB.

In this embodiment of this application, if the terminal configures the Type 2/Type 2A CSS on the separate initial DL BWP and/or the terminal monitors the common search space (CSS) in which the PDCCH scrambled by the P-RNTI and/or the PEI-RNTI is located, the terminal selects, by using the NCD-SSB, a CG PUSCH associated with the NCD-SSB. Otherwise, the terminal selects, by using the CD-SSB, a CG PUSCH associated with the CD-SSB.

Optionally, in some embodiments, in a case that the first SSB is the non-cell defining SSB, the first SSB is an SSB defined on the first BWP. That is, in this embodiment of this application, the non-CD SSB defined on the separate initial DL BWP is used to perform mapping with the CG PUSCH.

It should be noted that, whether the CD-SBB is configured on the first BWP may be understood as or be replaced with whether the CD-SBB is included on the first BWP. Whether the non-CD SBB is configured on the first BWP may be understood as or replaced with whether the non-CD SBB is included on the first BWP. The SSB defined on the first BWP may be understood as or replaced with an SSB included on the first BWP.

Optionally, in some embodiments, the second SSB meets at least one of the following:

The second SSB is a cell defining SSB or a non-cell defining SSB; and
the second SSB is determined according to a second preset rule.

Optionally, the second preset rule includes at least one of the following:
determining the second SSB depending on whether the network side device configures to use a cell defining SSB;
determining the second SSB depending on whether the network side device configures to use a non-cell defining SSB;
determining the second SSB depending on whether the network side device configures a non-cell defining SSB on the first BWP; and
determining the second SSB depending on whether the network side device configures a second object on the first BWP.

The second object includes at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

Optionally, in a case that the second preset rule includes determining the second SSB depending on whether the network side device configures a non-cell defining SSB on the first BWP, the second SSB meets the following:

In a case that the non-cell defining SSB is configured on the first BWP, the second SSB is the non-cell defining SSB; or
in a case that the non-cell defining SSB is not configured on the first BWP, the second SSB is a cell defining SSB.

In this embodiment of this application, when determining that the second SSB is the NCD-SSB, the terminal determines, by using the NCD-SSB, whether the TA is valid. When determining that the second SSB is the CD-SSB, the terminal determines, by using the CD-SSB, whether the TA is valid.

Optionally, in a case that the second preset rule includes determining the second SSB depending on whether the network side device configures a second object on the first BWP, the second SSB meets the following:

In a case that the second object is configured on the first BWP, the second SSB is a non-cell defining SSB; or
in a case that the second object is not configured on the first BWP, the second SSB is a cell defining SSB.

In this embodiment of this application, if the terminal configures the Type 2/Type 2A CSS on the separate initial DL BWP and/or the terminal monitors the common search space (CSS) in which the PDCCH scrambled by the P-RNTI and/or the PEI-RNTI is located, the terminal performs TA validity verification by using the NCD-SSB. Otherwise, the terminal performs TA validity verification by using the CD-SSB.

Optionally, in a case that the second SSB is the non-cell defining SSB, the second SSB is an SSB defined on the first BWP.

Optionally, in some embodiments, the target tracking reference signal is a tracking reference signal configured by the network side device on the first BWP or a second BWP, and the second BWP is an initial uplink BWP configured by the network side device.

In this embodiment of this application, the non-reduced capability terminal may be understood as a normal terminal. It should be noted that, the second BWP may be referred to as an initial UL BWP. When the network side device does not configure a separate initial UL BWP, the initial UL BWP may also be used by the RedCap terminal.

Optionally, in some embodiments, the target control resource set meets at least one of the following:

The target control resource set is determined based on a type of the terminal, and the type of the terminal includes a non-reduced capability terminal and a reduced capability terminal; and
the target control resource set is determined based on a target BWP, and the target BWP is a BWP on which the terminal is located before radio resource control is released (RRC release), where
   in a case that an index of a control resource set defined on the first BWP does not overlap with an index of a control resource set defined on a second BWP, the target control resource set is indicated by the network side device, and the second BWP is an initial uplink BWP configured by the network side device.

Optionally, the target control resource set is a control resource set defined on the target BWP. For example, if the UE is on an initial DL BWP before the RRC release, the target CORESET is a CORESET defined on the initial BWP. If the UE is on a separate initial DL BWP before the RRC release, the target CORESET is a CORESET defined on the separate initial BWP.

It should be understood that, in a case that an index of a control resource set defined on the first BWP does not overlap with an index of a control resource set defined on a second BWP, the target control resource set may be a control resource set defined on a BWP indicated by the network side device, may be an initial DL BWP, or may be a separate initial DL BWP.

Optionally, in a case that the target control resource set is determined based on a type of the terminal, the target control resource set meets at least one of the following:

In a case that the type of the terminal is a non-reduced capability terminal, the target control resource set is the control resource set defined on the second BWP; or
in a case that the type of the terminal is a reduced capability terminal, the target control resource set is the control resource set defined on the second BWP or the control resource set defined on the first BWP.

In this embodiment of this application, for non-RedCap UE, the target CORESET needs to be a CORESET defined on the initial DL BWP. For RedCap UE, the target CORESET may be a CORESET defined on the initial DL BWP or the separate initial DL BWP.

Optionally, in some embodiments, in a case that the type of the terminal is a reduced capability terminal, and the network side device configures the first BWP for the terminal, the target control resource set is the control resource set defined on the first BWP.

In this embodiment of this application, if the network side device configures the separate initial DL BWP, the target CORESET needs to be a CORESET defined on the separate initial DL BWP.

Optionally, in some embodiments, in a case that the terminal is a reduced capability terminal, and time division duplexing is used for a cell in which the terminal is located, transmission of data by the terminal meets any one of the following:

In a data transmission process, the terminal does not expect radio frequency retuning;
in a data transmission process, the terminal does not expect center frequencies of uplink sending and downlink reception to be inconsistent; and
in a data transmission process, the terminal expects center frequencies of uplink sending and downlink reception to be consistent.

Refer to FIG. 3. An embodiment of this application further provides a data receiving method. The method includes the following steps.

Step 301: A network side device performs a first operation.

Step 302: The network side device receives target data from a terminal on a first bandwidth part (BWP) based on the first operation.

The terminal is in an idle state or an inactive state, the first BWP is an initial uplink BWP configured by the network side device for a reduced capability terminal, and the first operation includes at least one of the following:
mapping between a first synchronization signal block SSB and a configured grant physical uplink shared channel;
determining, based on a target object, whether a timing advance used by the configured grant physical uplink shared channel is valid, where the target object is a second SSB or a target tracking reference signal; and
determining a target control resource set used for sending the target data, where the target control resource set is a control resource set associated with dedicated search space for monitoring a physical downlink control channel PDCCH.

Optionally, the first SSB meets at least one of the following:

The first SSB is a cell defining SSB or a non-cell defining SSB; and
the first SSB is determined according to a first preset rule.

Optionally, the first preset rule includes at least one of the following:
determining the first SSB depending on whether the network side device configures to use a cell defining SSB;
determining the first SSB depending on whether the network side device configures to use a non-cell defining SSB;
determining the first SSB depending on whether the network side device configures a non-cell defining SSB on the first BWP; and
determining the first SSB depending on whether the network side device configures a first object on the first BWP.

The first object includes at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

Optionally, in a case that the first preset rule includes determining the first SSB depending on whether the network side device configures a non-cell defining SSB on the first BWP, the first SSB meets the following:

In a case that the non-cell defining SSB is configured on the first BWP, the first SSB is the non-cell defining SSB; or
in a case that the non-cell defining SSB is not configured on the first BWP, the first SSB is a cell defining SSB.

Optionally, in a case that the first preset rule includes determining the first SSB depending on whether the network side device configures a first object on the first BWP, the first SSB meets the following:

In a case that the first object is configured on the first BWP, the first SSB is a non-cell defining SSB; or
in a case that the first object is not configured on the first BWP, the first SSB is a cell defining SSB.

Optionally, in a case that the first SSB is the non-cell defining SSB, the first SSB is an SSB defined on the first BWP.

Optionally, the second SSB meets at least one of the following:

The second SSB is a cell defining SSB or a non-cell defining SSB; and
the second SSB is determined according to a second preset rule.

Optionally, the second preset rule includes at least one of the following:
determining the second SSB depending on whether the network side device configures to use a cell defining SSB;
determining the second SSB depending on whether the network side device configures to use a non-cell defining SSB;
determining the second SSB depending on whether the network side device configures a non-cell defining SSB on the first BWP; and
determining the second SSB depending on whether the network side device configures a second object on the first BWP.

The second object includes at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

Optionally, in a case that the second preset rule includes determining the second SSB depending on whether the network side device configures a non-cell defining SSB on the first BWP, the second SSB meets the following:

In a case that the non-cell defining SSB is configured on the first BWP, the second SSB is the non-cell defining SSB; or
in a case that the non-cell defining SSB is not configured on the first BWP, the second SSB is a cell defining SSB.

Optionally, in a case that the second preset rule includes determining the second SSB depending on whether the network side device configures a second object on the first BWP, the second SSB meets the following:

In a case that the second object is configured on the first BWP, the second SSB is a non-cell defining SSB; or
in a case that the second object is not configured on the first BWP, the second SSB is a cell defining SSB.

Optionally, in a case that the second SSB is the non-cell defining SSB, the second SSB is an SSB defined on the first BWP.

Optionally, both the second SSB and the first SSB are cell defining SSBs or non-cell defining SSBs.

Optionally, the target tracking reference signal is a tracking reference signal configured by the network side device on the first BWP or a second BWP, and the second BWP is an initial uplink BWP configured by the network side device.

Optionally, the target tracking reference signal is a tracking reference signal configured by the network side device on the first BWP or the second BWP for a terminal in an idle state or an inactive state.

Optionally, the target control resource set meets at least one of the following:

The target control resource set is determined based on a type of the terminal, and the type of the terminal includes a non-reduced capability terminal and a reduced capability terminal; and
the target control resource set is determined based on a target BWP, and the target BWP is a BWP on which the terminal is located before radio resource control is released, where
in a case that an index of a control resource set defined on the first BWP does not overlap with an index of a control resource set defined on a second BWP, the target control resource set is indicated by the network side device, and the second BWP is an initial uplink BWP configured by the network side device.

Optionally, in a case that the target control resource set is determined based on a type of the terminal, the target control resource set meets at least one of the following:

In a case that the type of the terminal is a non-reduced capability terminal, the target control resource set is the control resource set defined on the second BWP; or
in a case that the type of the terminal is a reduced capability terminal, the target control resource set is the control resource set defined on the second BWP or the control resource set defined on the first BWP.

Optionally, in a case that the type of the terminal is a reduced capability terminal, and the network side device configures the first BWP for the terminal, the target control resource set is the control resource set defined on the first BWP.

Optionally, the target control resource set is a control resource set defined on the target BWP.

An execution body of the data sending method provided in embodiments of this application may be a data sending apparatus. In the embodiments of this application, the data sending apparatus provided in the embodiments of this application is described by using an example in which the data sending apparatus performs the data sending method.

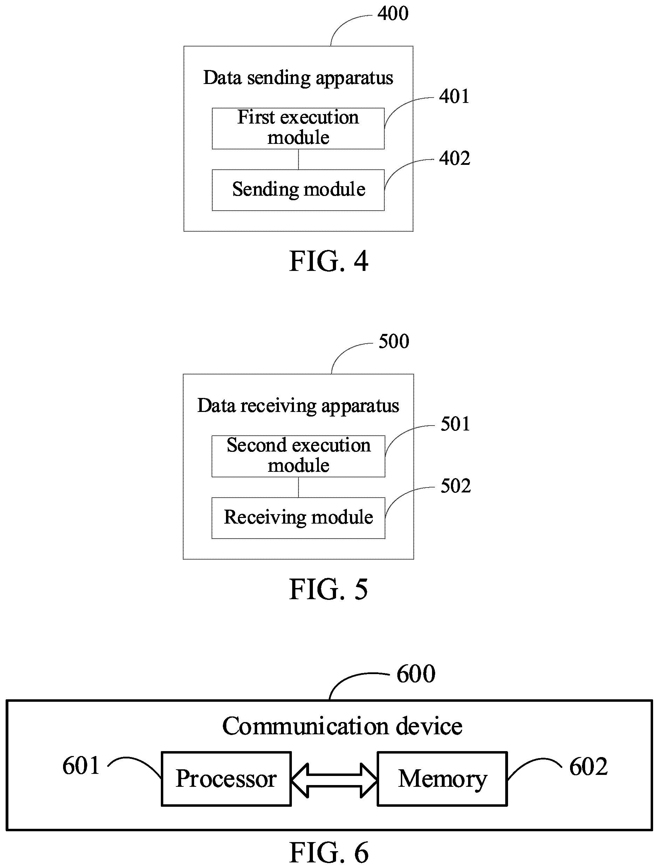

As shown in FIG. 4, a data sending apparatus 400 provided in an embodiment of this application includes:
a first performing module 401, configured to perform a first operation; and
a sending module 402, configured to send, in a case that a terminal is in an idle state or an inactive state, target data on a first bandwidth part BWP based on the first operation.

The first BWP is an initial uplink BWP configured by a network side device for a reduced capability terminal, and the first operation includes at least one of the following:
mapping between a first synchronization signal block SSB and a configured grant physical uplink shared channel;
determining, based on a target object, whether a timing advance used by the configured grant physical uplink shared channel is valid, where the target object is a second SSB or a target tracking reference signal; and
determining a target control resource set used for sending the target data, where the target control resource set is a control resource set associated with dedicated search space for monitoring a physical downlink control channel PDCCH.

Optionally, the first SSB meets at least one of the following:

The first SSB is a cell defining SSB or a non-cell defining SSB; and
the first SSB is determined according to a first preset rule.

Optionally, the first preset rule includes at least one of the following:
determining the first SSB depending on whether the network side device configures to use a cell defining SSB;
determining the first SSB depending on whether the network side device configures to use a non-cell defining SSB;
determining the first SSB depending on whether the network side device configures a non-cell defining SSB on the first BWP; and
determining the first SSB depending on whether the network side device configures a first object on the first BWP.

The first object includes at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

Optionally, in a case that the first preset rule includes determining the first SSB depending on whether the network side device configures a non-cell defining SSB on the first BWP, the first SSB meets the following:

In a case that the non-cell defining SSB is configured on the first BWP, the first SSB is the non-cell defining SSB; or
in a case that the non-cell defining SSB is not configured on the first BWP, the first SSB is a cell defining SSB.

Optionally, in a case that the first preset rule includes determining the first SSB depending on whether the network side device configures a first object on the first BWP, the first SSB meets the following:

In a case that the first object is configured on the first BWP, the first SSB is a non-cell defining SSB; or
in a case that the first object is not configured on the first BWP, the first SSB is a cell defining SSB.

Optionally, in a case that the first SSB is the non-cell defining SSB, the first SSB is an SSB defined on the first BWP.

Optionally, the second SSB meets at least one of the following:

The second SSB is a cell defining SSB or a non-cell defining SSB; and
the second SSB is determined according to a second preset rule.

Optionally, the second preset rule includes at least one of the following:
determining the second SSB depending on whether the network side device configures to use a cell defining SSB;
determining the second SSB depending on whether the network side device configures to use a non-cell defining SSB;
determining the second SSB depending on whether the network side device configures a non-cell defining SSB on the first BWP; and
determining the second SSB depending on whether the network side device configures a second object on the first BWP.

The second object includes at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

Optionally, in a case that the second preset rule includes determining the second SSB depending on whether the network side device configures a non-cell defining SSB on the first BWP, the second SSB meets the following:

In a case that the non-cell defining SSB is configured on the first BWP, the second SSB is the non-cell defining SSB; or
in a case that the non-cell defining SSB is not configured on the first BWP, the second SSB is a cell defining SSB.

Optionally, in a case that the second preset rule includes determining the second SSB depending on whether the network side device configures a second object on the first BWP, the second SSB meets the following:

In a case that the second object is configured on the first BWP, the second SSB is a non-cell defining SSB; or
in a case that the second object is not configured on the first BWP, the second SSB is a cell defining SSB.

Optionally, in a case that the second SSB is the non-cell defining SSB, the second SSB is an SSB defined on the first BWP.

Optionally, both the second SSB and the first SSB are cell defining SSBs or non-cell defining SSBs.

Optionally, the target tracking reference signal is a tracking reference signal configured by the network side device on the first BWP or a second BWP, and the second BWP is an initial uplink BWP configured by the network side device.

Optionally, the target tracking reference signal is a tracking reference signal configured by the network side device on the first BWP or the second BWP for a terminal in an idle state or an inactive state.

Optionally, the target control resource set meets at least one of the following:

The target control resource set is determined based on a type of the terminal, and the type of the terminal includes a non-reduced capability terminal and a reduced capability terminal; and
the target control resource set is determined based on a target BWP, and the target BWP is a BWP on which the terminal is located before radio resource control is released, where
in a case that an index of a control resource set defined on the first BWP does not overlap with an index of a control resource set defined on a second BWP, the target control resource set is indicated by the network side device, and the second BWP is an initial uplink BWP configured by the network side device.

Optionally, in a case that the target control resource set is determined based on a type of the terminal, the target control resource set meets at least one of the following:

In a case that the type of the terminal is a non-reduced capability terminal, the target control resource set is the control resource set defined on the second BWP; or
in a case that the type of the terminal is a reduced capability terminal, the target control resource set is the control resource set defined on the second BWP or the control resource set defined on the first BWP.

Optionally, in a case that the type of the terminal is a reduced capability terminal, and the network side device configures the first BWP for the terminal, the target control resource set is the control resource set defined on the first BWP.

Optionally, the target control resource set is a control resource set defined on the target BWP.

Optionally, in a case that the terminal is a reduced capability terminal, and time division duplexing is used for a cell in which the terminal is located, transmission of data by the terminal meets any one of the following:

In a data transmission process, the terminal does not expect radio frequency retuning;
in a data transmission process, the terminal does not expect center frequencies of uplink sending and downlink reception to be inconsistent; and
in a data transmission process, the terminal expects center frequencies of uplink sending and downlink reception to be consistent.

An execution body of the data receiving method provided in embodiments of this application may be a data receiving apparatus. In the embodiments of this application, the data receiving apparatus provided in the embodiments of this application is described by using an example in which the data receiving apparatus performs the data receiving method.

As shown in FIG. 5, a data receiving apparatus 500 provided in an embodiment of this application includes:
a second performing module 501, configured to perform a first operation; and
a receiving module 502, configured to receive target data from a terminal on a first bandwidth part BWP based on the first operation.

The terminal is in an idle state or an inactive state, the first BWP is an initial uplink BWP configured by the network side device for a reduced capability terminal, and the first operation includes at least one of the following:
mapping between a first synchronization signal block SSB and a configured grant physical uplink shared channel;
determining, based on a target object, whether a timing advance used by the configured grant physical uplink shared channel is valid, where the target object is a second SSB or a target tracking reference signal; and
determining a target control resource set used for sending the target data, where the target control resource set is a control resource set associated with dedicated search space for monitoring a physical downlink control channel PDCCH.

Optionally, the first SSB meets at least one of the following:

The first SSB is a cell defining SSB or a non-cell defining SSB; and
the first SSB is determined according to a first preset rule.

Optionally, the first preset rule includes at least one of the following:
determining the first SSB depending on whether the network side device configures to use a cell defining SSB;
determining the first SSB depending on whether the network side device configures to use a non-cell defining SSB;
determining the first SSB depending on whether the network side device configures a non-cell defining SSB on the first BWP; and
determining the first SSB depending on whether the network side device configures a first object on the first BWP.

The first object includes at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

Optionally, in a case that the first preset rule includes determining the first SSB depending on whether the network side device configures a non-cell defining SSB on the first BWP, the first SSB meets the following:

In a case that the non-cell defining SSB is configured on the first BWP, the first SSB is the non-cell defining SSB; or
in a case that the non-cell defining SSB is not configured on the first BWP, the first SSB is a cell defining SSB.

Optionally, in a case that the first preset rule includes determining the first SSB depending on whether the network side device configures a first object on the first BWP, the first SSB meets the following:

In a case that the first object is configured on the first BWP, the first SSB is a non-cell defining SSB; or
in a case that the first object is not configured on the first BWP, the first SSB is a cell defining SSB.

Optionally, in a case that the first SSB is the non-cell defining SSB, the first SSB is an SSB defined on the first BWP.

Optionally, the second SSB meets at least one of the following:

The second SSB is a cell defining SSB or a non-cell defining SSB; and
the second SSB is determined according to a second preset rule.

Optionally, the second preset rule includes at least one of the following:
determining the second SSB depending on whether the network side device configures to use a cell defining SSB;
determining the second SSB depending on whether the network side device configures to use a non-cell defining SSB;
determining the second SSB depending on whether the network side device configures a non-cell defining SSB on the first BWP; and
determining the second SSB depending on whether the network side device configures a second object on the first BWP.

The second object includes at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

Optionally, in a case that the second preset rule includes determining the second SSB depending on whether the network side device configures a non-cell defining SSB on the first BWP, the second SSB meets the following:

In a case that the non-cell defining SSB is configured on the first BWP, the second SSB is the non-cell defining SSB; or
in a case that the non-cell defining SSB is not configured on the first BWP, the second SSB is a cell defining SSB.

Optionally, in a case that the second preset rule includes determining the second SSB depending on whether the network side device configures a second object on the first BWP, the second SSB meets the following:

In a case that the second object is configured on the first BWP, the second SSB is a non-cell defining SSB; or
in a case that the second object is not configured on the first BWP, the second SSB is a cell defining SSB.

Optionally, in a case that the second SSB is the non-cell defining SSB, the second SSB is an SSB defined on the first BWP.

Optionally, both the second SSB and the first SSB are cell defining SSBs or non-cell defining SSBs.

Optionally, the target tracking reference signal is a tracking reference signal configured by the network side device on the first BWP or a second BWP, and the second BWP is an initial uplink BWP configured by the network side device.

Optionally, the target tracking reference signal is a tracking reference signal configured by the network side device on the first BWP or the second BWP for a terminal in an idle state or an inactive state.

Optionally, the target control resource set meets at least one of the following:

The target control resource set is determined based on a type of the terminal, and the type of the terminal includes a non-reduced capability terminal and a reduced capability terminal; and
the target control resource set is determined based on a target BWP, and the target BWP is a BWP on which the terminal is located before radio resource control is released, where
in a case that an index of a control resource set defined on the first BWP does not overlap with an index of a control resource set defined on a second BWP, the target control resource set is indicated by the network side device, and the second BWP is an initial uplink BWP configured by the network side device.

Optionally, in a case that the target control resource set is determined based on a type of the terminal, the target control resource set meets at least one of the following:

In a case that the type of the terminal is a non-reduced capability terminal, the target control resource set is the control resource set defined on the second BWP; or
in a case that the type of the terminal is a reduced capability terminal, the target control resource set is the control resource set defined on the second BWP or the control resource set defined on the first BWP.

Optionally, in a case that the type of the terminal is a reduced capability terminal, and the network side device configures the first BWP for the terminal, the target control resource set is the control resource set defined on the first BWP.

Optionally, the target control resource set is a control resource set defined on the target BWP.

The data sending apparatus and the data receiving apparatus in the embodiments of this application may be an electronic device, for example, an electronic device that has an operating system, or may be a component, for example, an integrated circuit or a chip, in the electronic device. The electronic device may be a terminal or another device other than the terminal. For example, the terminal may include but is not limited to the types of the terminal 11 listed above. The another device may be a server, a network attached storage (Network Attached Storage, NAS), or the like. This is not specifically limited in the embodiments of this application.

The data sending apparatus provided in the embodiments of this application can implement the processes implemented in the method embodiment of FIG. 2, the data receiving apparatus can implement the processes implemented in the method embodiment of FIG. 3, and same technical effects are achieved. To avoid repetition, details are not described herein.

Optionally, as shown in FIG. 6, an embodiment of this application further provides a communication device 600, including a processor 601 and a memory 602. The memory 602 stores a program or instructions that can run on the processor 601. For example, when the communication device 600 is a terminal, the program or the instructions, when being executed by the processor 601, implement various processes of the data sending method embodiment, and same technical effects can be achieved. When the communication device 600 is a network side device, the program or the instructions, when being executed by the processor 601, implement various processes of the data receiving method embodiment, and same technical effects can be achieved. To avoid repetition, details are not described herein.

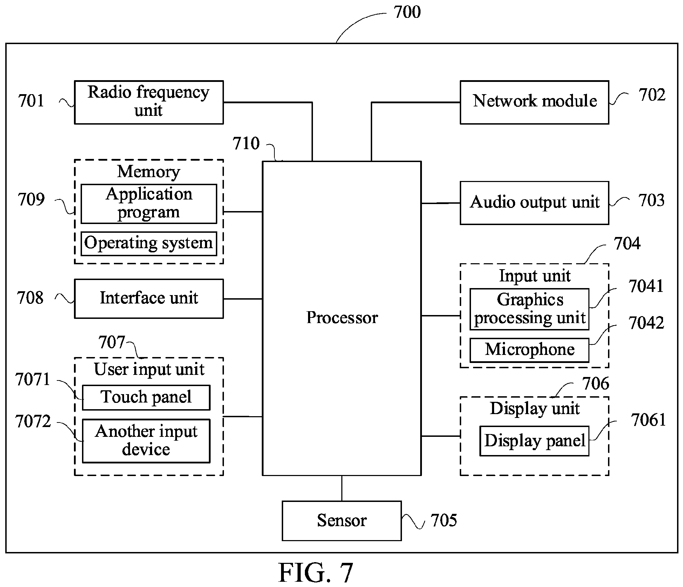

An embodiment of this application further provides a terminal, including a processor and a communication interface. The processor is configured to perform a first operation. The communication interface is configured to send, in a case that the terminal is in an idle state or an inactive state, target data on a first bandwidth part BWP based on the first operation. The first BWP is an initial uplink BWP configured by a network side device for a reduced capability terminal, and the first operation includes at least one of the following: mapping between a first synchronization signal block SSB and a configured grant physical uplink shared channel; determining, based on a target object, whether a timing advance used by the configured grant physical uplink shared channel is valid, where the target object is a second SSB or a target tracking reference signal; and determining a target control resource set used for sending the target data, where the target control resource set is a control resource set associated with dedicated search space for monitoring a physical downlink control channel PDCCH. This terminal embodiment corresponds to the foregoing terminal-side method embodiment. Various implementation processes and implementations of the foregoing method embodiment are all applicable to this terminal embodiment, and same technical effects can be achieved. Specifically, FIG. 7 is a schematic diagram of a hardware structure of a terminal according to an embodiment of this application.

The terminal 700 includes, but is not limited to: at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) for supplying power to the components. The power supply may be logically connected to the processor 710 through a power management system, to implement functions such as charging, discharging, and power consumption management through the power management system. A terminal structure shown in FIG. 7 constitutes no limitation on the terminal, and the terminal may include more or fewer components than those shown in the figure, or some components may be combined, or a different component deployment may be used. Details are not described herein.

It should be understood that, in this embodiment of this application, the input unit 704 may include a graphics processing unit (Graphics Processing Unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include a display panel 7061. The display panel 7061 may be configured in a form of a liquid crystal display, an organic light-emitting diode, or the like. The user input unit 707 includes at least one of a touch panel 7071 and another input device 7072. The touch panel 7071 is also referred to as a touch screen. The touch panel 7071 may include two parts: a touch detection apparatus and a touch controller. The another input device 7072 may include, but not limited to, a physical keyboard, a functional key (such as a volume control key or a switch key), a track ball, a mouse, and a joystick. Details are not described herein.

In this embodiment of this application, after receiving downlink data from a network side device, the radio frequency unit 701 may transmit the downlink data to the processor 710 for processing. In addition, the radio frequency unit 701 may send uplink data to the network side device. Usually, the radio frequency unit 701 includes, but is not limited to, an antenna, an amplifier, a transceiver, a coupler, a low noise amplifier, a duplexer, and the like.

The memory 709 can be configured to store a software program or instructions and various data. The memory 709 may mainly include a first storage area for storing the program or the instructions and a second storage area for storing the data. The first storage area may store an operating system, an application program or instructions required by at least one function (for example, a sound playback function and an image display function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The non-volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DR RAM). The memory 709 in this embodiment of this application includes, but is not limited to, these memories and any other suitable types of memories.

The processor 710 may include one or more processing units. Optionally, the processor 710 integrates an application processor and a modem processor, where the application processor mainly processes operations related to an operating system, a user interface, an application program, and the like, and the modem processor, for example, a baseband processor, mainly processes a wireless communication signal. It may be understood that, the modem processor may not be integrated into the processor 710.

The processor 710 is configured to perform a first operation.

The radio frequency unit 701 is configured to send, in a case that a terminal is in an idle state or an inactive state, target data on a first bandwidth part BWP based on the first operation.

The first BWP is an initial uplink BWP configured by a network side device for a reduced capability terminal, and the first operation includes at least one of the following: mapping between a first synchronization signal block SSB and a configured grant physical uplink shared channel; determining, based on a target object, whether a timing advance used by the configured grant physical uplink shared channel is valid, where the target object is a second SSB or a target tracking reference signal; and determining a target control resource set used for sending the target data, where the target control resource set is a control resource set associated with dedicated search space for monitoring a physical downlink control channel PDCCH.

In this embodiment of this application, the first operation is performed. The terminal sends, in a case that the terminal is in the idle state or the inactive state, the target data on the first bandwidth part BWP based on the first operation. The first BWP is the initial uplink BWP configured by the network side device for the reduced capability terminal, and the first operation includes at least one of the following: mapping between a first synchronization signal block SSB and a configured grant physical uplink shared channel; determining, based on a target object, whether a timing advance used by the configured grant physical uplink shared channel is valid, where the target object is a second SSB or a target tracking reference signal; and determining a target control resource set used for sending the target data, where the target control resource set is a control resource set associated with dedicated search space for monitoring a physical downlink control channel PDCCH. In this way, the terminal may implement CG-scheduling based small data transmission in an RRC inactive or idle state, to reduce power consumption of the terminal and saving signaling overheads.

Optionally, the first SSB meets at least one of the following:

The first SSB is a cell defining SSB or a non-cell defining SSB; and
the first SSB is determined according to a first preset rule.

Optionally, the first preset rule includes at least one of the following:
determining the first SSB depending on whether the network side device configures to use a cell defining SSB;
determining the first SSB depending on whether the network side device configures to use a non-cell defining SSB;
determining the first SSB depending on whether the network side device configures a non-cell defining SSB on the first BWP; and
determining the first SSB depending on whether the network side device configures a first object on the first BWP.

The first object includes at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

Optionally, in a case that the first preset rule includes determining the first SSB depending on whether the network side device configures a non-cell defining SSB on the first BWP, the first SSB meets the following:

In a case that the non-cell defining SSB is configured on the first BWP, the first SSB is the non-cell defining SSB; or
in a case that the non-cell defining SSB is not configured on the first BWP, the first SSB is a cell defining SSB.

Optionally, in a case that the first preset rule includes determining the first SSB depending on whether the network side device configures a first object on the first BWP, the first SSB meets the following:

In a case that the first object is configured on the first BWP, the first SSB is a non-cell defining SSB; or
in a case that the first object is not configured on the first BWP, the first SSB is a cell defining SSB.

Optionally, in a case that the first SSB is the non-cell defining SSB, the first SSB is an SSB defined on the first BWP.

Optionally, the second SSB meets at least one of the following:

The second SSB is a cell defining SSB or a non-cell defining SSB; and
the second SSB is determined according to a second preset rule.

Optionally, the second preset rule includes at least one of the following:
determining the second SSB depending on whether the network side device configures to use a cell defining SSB;
determining the second SSB depending on whether the network side device configures to use a non-cell defining SSB;
determining the second SSB depending on whether the network side device configures a non-cell defining SSB on the first BWP; and
determining the second SSB depending on whether the network side device configures a second object on the first BWP.

The second object includes at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

Optionally, in a case that the second preset rule includes determining the second SSB depending on whether the network side device configures a non-cell defining SSB on the first BWP, the second SSB meets the following:

In a case that the non-cell defining SSB is configured on the first BWP, the second SSB is the non-cell defining SSB; or
in a case that the non-cell defining SSB is not configured on the first BWP, the second SSB is a cell defining SSB.

Optionally, in a case that the second preset rule includes determining the second SSB depending on whether the network side device configures a second object on the first BWP, the second SSB meets the following:

In a case that the second object is configured on the first BWP, the second SSB is a non-cell defining SSB; or
in a case that the second object is not configured on the first BWP, the second SSB is a cell defining SSB.

Optionally, in a case that the second SSB is the non-cell defining SSB, the second SSB is an SSB defined on the first BWP.

Optionally, both the second SSB and the first SSB are cell defining SSBs or non-cell defining SSBs.

Optionally, the target tracking reference signal is a tracking reference signal configured by the network side device on the first BWP or a second BWP, and the second BWP is an initial uplink BWP configured by the network side device.

Optionally, the target tracking reference signal is a tracking reference signal configured by the network side device on the first BWP or the second BWP for a terminal in an idle state or an inactive state.

Optionally, the target control resource set meets at least one of the following:

The target control resource set is determined based on a type of the terminal, and the type of the terminal includes a non-reduced capability terminal and a reduced capability terminal; and
the target control resource set is determined based on a target BWP, and the target BWP is a BWP on which the terminal is located before radio resource control is released, where
in a case that an index of a control resource set defined on the first BWP does not overlap with an index of a control resource set defined on a second BWP, the target control resource set is indicated by the network side device, and the second BWP is an initial uplink BWP configured by the network side device.

Optionally, in a case that the target control resource set is determined based on a type of the terminal, the target control resource set meets at least one of the following:

In a case that the type of the terminal is a non-reduced capability terminal, the target control resource set is the control resource set defined on the second BWP; or
in a case that the type of the terminal is a reduced capability terminal, the target control resource set is the control resource set defined on the second BWP or the control resource set defined on the first BWP.

Optionally, in a case that the type of the terminal is a reduced capability terminal, and the network side device configures the first BWP for the terminal, the target control resource set is the control resource set defined on the first BWP.

Optionally, the target control resource set is a control resource set defined on the target BWP.

Optionally, in a case that the terminal is a reduced capability terminal, and time division duplexing is used for a cell in which the terminal is located, transmission of data by the terminal meets any one of the following:

In a data transmission process, the terminal does not expect radio frequency retuning;
in a data transmission process, the terminal does not expect center frequencies of uplink sending and downlink reception to be inconsistent; and
in a data transmission process, the terminal expects center frequencies of uplink sending and downlink reception to be consistent.

An embodiment of this application further provides a network side device, including a processor and a communication interface. The processor is configured to perform a first operation. The communication interface is configured to receive target data from a terminal on a first bandwidth part BWP based on the first operation. The terminal is in an idle state or an inactive state, the first BWP is an initial uplink BWP configured by the network side device for a reduced capability terminal, and the first operation includes at least one of the following: mapping between a first synchronization signal block SSB and a configured grant physical uplink shared channel; determining, based on a target object, whether a timing advance used by the configured grant physical uplink shared channel is valid, where the target object is a second SSB or a target tracking reference signal; and determining a target control resource set used for sending the target data, where the target control resource set is a control resource set associated with dedicated search space for monitoring a physical downlink control channel PDCCH. The network side device embodiment corresponds to the foregoing network side device method embodiments. Implementation processes and implementations of the foregoing method embodiments are all applicable to the network side device embodiment, and same technical effects can be achieved.

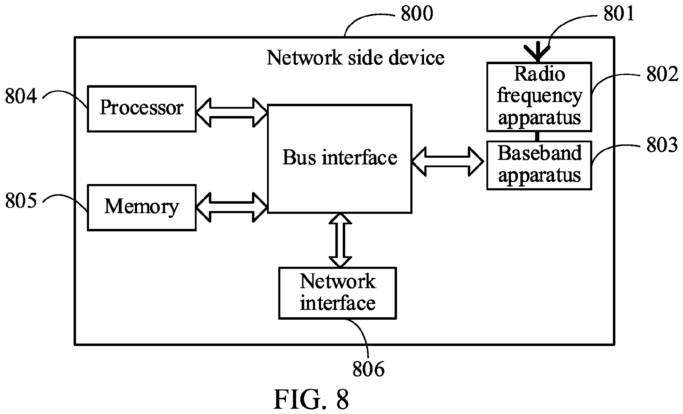

Specifically, an embodiment of this application further provides a network side device. As shown in FIG. 8, the network side device 800 includes: an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes to-be-sent information and sends the information to the radio frequency apparatus 802. The radio frequency apparatus 802 processes received information and sends the information through the antenna 801.

The method performed by the network side device in the foregoing embodiment may be implemented in the baseband apparatus 803. The baseband apparatus 803 includes a baseband processor.

The baseband apparatus 803 may include, for example, at least one baseband board. A plurality of chips are disposed on the baseband board. As shown in FIG. 8, one chip is, for example, a baseband processor, and is connected to the memory 805 through a bus interface, to invoke a program in the memory 805 to perform the network device operations shown in the foregoing method embodiments.

The network side device may further include a network interface 806. The interface is, for example, a common public radio interface (common public radio interface, CPRI).

Specifically, the network side device 800 in this embodiment of this application further includes: instructions or a program stored in the memory 805 and that can run on the processor 804. The processor 804 invokes the instructions or the program in the memory 805 to perform the method performed by the modules shown in FIG. 5, and same technical effects can be achieved. To avoid repetition, details are not described herein.

An embodiment of this application further provides a readable storage medium. The readable storage medium stores a program or instructions. The program or the instructions, when being executed by a processor, implement the processes of the foregoing data sending method or data receiving method embodiments, and same technical effects can be achieved. To avoid repetition, details are not described herein.

The processor is the processor in the terminal described in the foregoing embodiments. The readable storage medium includes a computer-readable storage medium, for example, a computer read-only memory ROM, a random access memory RAM, a magnetic disk, an optical disc, or the like.

An embodiment of this application further provides a chip. The chip includes a processor and a communication interface. The communication interface and the processor are coupled to each other. The processor is configured to run a program or instructions, to implement the processes of the data sending method or data receiving method embodiments, and same technical effects can be achieved. To avoid repetition, details are not described herein.

It should be understood that the chip mentioned in this embodiment of this application may also be referred to as a system-level chip, a system chip, a chip system, a system on a chip, or the like.

An embodiment of this application further provides a computer program/program product. The computer program/program product is stored in a storage medium. The computer program/program product is executed by at least one processor, to implement the processes of the foregoing data sending method or data receiving method embodiments, and same technical effects can be achieved. To avoid repetition, details are not described herein.

An embodiment of this application provides a communication system, including: a terminal and a network side device. The terminal can be configured to perform the steps of the data sending method as described above, and the network side device can be configured to perform the steps of the data receiving method as described above.

It should be noted that, the terms "include", "comprise", or any other variations thereof are intended to cover a non-exclusive inclusion, so that a process, a method, an article, or an apparatus including a series of elements not only includes those elements, but also includes other elements that are not explicitly listed, or also includes inherent elements of the process, the method, the article, or the apparatus. Without more restrictions, the elements defined by the sentence "including a ... " do not exclude the existence of other identical elements in the process, method, article, or apparatus including the elements. In addition, it should be noted that the scope of the method and apparatus in the implementations of this application is not limited to performing functions in the order shown or discussed, and may further include performing functions in a substantially simultaneous manner or in a reverse order according to the functions involved. For example, the described methods may be performed in an order different from the described order, and various steps may be added, omitted, or combined. In addition, features described in some examples may be combined in other examples.

According to the descriptions in the foregoing implementations, a person skilled in the art may clearly understand that the method according to the foregoing embodiments may be implemented by relying on software and a necessary general-purpose hardware platform. Certainly, the hardware may be used, but the former is a better implementation in many cases. Based on such an understanding, the technical solutions of this application essentially, or the part contributing to the prior art, may be embodied in a form of a computer software product. The computer software product is stored in a storage medium (for example, a ROM/RAM, a magnetic disk, or an optical disc), and includes several instructions to enable a terminal (which may be a mobile phone, a computer, a server, an air conditioner, a network device, or the like) to perform the methods described in the embodiments of this application.

The embodiments of this application are described above with reference to the accompanying drawings. However, this application is not limited to the specific implementations described above, and the specific implementations described above are merely examples and not limitative. Those of ordinary skill in the art may make various variations under the teaching of this application without departing from the purpose of this application and the protection scope of the claims, and such variations shall all fall within the protection scope of this application.

## Claims

1. A data sending method, comprising:
performing, by a terminal, a first operation; and
sending, by the terminal in a case that the terminal is in an idle state or an inactive state, target data on a first bandwidth part BWP based on the first operation, wherein
the first BWP is an initial uplink BWP configured by a network side device for a reduced capability terminal, and the first operation comprises at least one of the following:
mapping between a first synchronization signal block SSB and a configured grant physical uplink shared channel;
determining, based on a target object, whether a timing advance used by the configured grant physical uplink shared channel is valid, wherein the target object is a second SSB or a target tracking reference signal; and
determining a target control resource set used for sending the target data, wherein the target control resource set is a control resource set associated with dedicated search space used for monitoring a physical downlink control channel PDCCH.

2. The method according to claim 1, wherein the first SSB meets at least one of the following:
the first SSB is a cell defining SSB or a non-cell defining SSB; and
the first SSB is determined according to a first preset rule.

3. The method according to claim 2, wherein the first preset rule comprises at least one of the following:
determining the first SSB depending on whether the network side device configures to use a cell defining SSB;
determining the first SSB depending on whether the network side device configures to use a non-cell defining SSB;
determining the first SSB depending on whether the network side device configures a non-cell defining SSB on the first BWP; and
determining the first SSB depending on whether the network side device configures a first object on the first BWP, wherein
the first object comprises at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located .

4. The method according to claim 3, wherein in a case that the first preset rule comprises determining the first SSB depending on whether the network side device configures a non-cell defining SSB on the first BWP, the first SSB meets the following:
in a case that the non-cell defining SSB is configured on the first BWP, the first SSB is the non-cell defining SSB; or
in a case that the non-cell defining SSB is not configured on the first BWP, the first SSB is a cell defining SSB.

5. The method according to claim 3, wherein in a case that the first preset rule comprises determining the first SSB depending on whether the network side device configures a first object on the first BWP, the first SSB meets the following:
in a case that the first object is configured on the first BWP, the first SSB is a non-cell defining SSB; or
in a case that the first object is not configured on the first BWP, the first SSB is a cell defining SSB.

6. The method according to claim 2, wherein in a case that the first SSB is the non-cell defining SSB, the first SSB is an SSB defined on the first BWP.

7. The method according to claim 1, wherein the second SSB meets at least one of the following:
the second SSB is a cell defining SSB or a non-cell defining SSB; and
the second SSB is determined according to a second preset rule.

8. The method according to claim 7, wherein the second preset rule comprises at least one of the following:
determining the second SSB depending on whether the network side device configures to use a cell defining SSB;
determining the second SSB depending on whether the network side device configures to use a non-cell defining SSB;
determining the second SSB depending on whether the network side device configures a non-cell defining SSB on the first BWP; and
determining the second SSB depending on whether the network side device configures a second object on the first BWP, wherein
the second object comprises at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

9. The method according to claim 8, wherein in a case that the second preset rule comprises determining the second SSB depending on whether the network side device configures a non-cell defining SSB on the first BWP, the second SSB meets the following:
in a case that the non-cell defining SSB is configured on the first BWP, the second SSB is the non-cell defining SSB; or
in a case that the non-cell defining SSB is not configured on the first BWP, the second SSB is a cell defining SSB.

10. The method according to claim 8, wherein in a case that the second preset rule comprises determining the second SSB depending on whether the network side device configures a second object on the first BWP, the second SSB meets the following:
in a case that the second object is configured on the first BWP, the second SSB is a non-cell defining SSB; or
in a case that the second object is not configured on the first BWP, the second SSB is a cell defining SSB.

11. The method according to claim 7, wherein in a case that the second SSB is the non-cell defining SSB, the second SSB is an SSB defined on the first BWP.

12. The method according to claim 1, wherein both the second SSB and the first SSB are cell defining SSBs or non-cell defining SSBs.

13. The method according to claim 1, wherein the target tracking reference signal is a tracking reference signal configured by the network side device on the first BWP or a second BWP, and the second BWP is an initial uplink BWP configured by the network side device.

14. The method according to claim 13, wherein the target tracking reference signal is a tracking reference signal configured by the network side device on the first BWP or the second BWP for a terminal in an idle state or an inactive state.

15. The method according to claim 1, wherein the target control resource set meets at least one of the following:
the target control resource set is determined based on a type of the terminal, and the type of the terminal comprises a non-reduced capability terminal and a reduced capability terminal; and
the target control resource set is determined based on a target BWP, and the target BWP is a BWP on which the terminal is located before radio resource control is released, wherein
in a case that an index of a control resource set defined on the first BWP does not overlap with an index of a control resource set defined on a second BWP, the target control resource set is indicated by the network side device, and the second BWP is an initial uplink BWP configured by the network side device.

16. The method according to claim 15, wherein in a case that the target control resource set is determined based on a type of the terminal, the target control resource set meets at least one of the following:
in a case that the type of the terminal is a non-reduced capability terminal, the target control resource set is the control resource set defined on the second BWP; or
in a case that the type of the terminal is a reduced capability terminal, the target control resource set is the control resource set defined on the second BWP or the control resource set defined on the first BWP.

17. The method according to claim 16, wherein in a case that the type of the terminal is a reduced capability terminal, and the network side device configures the first BWP for the terminal, the target control resource set is the control resource set defined on the first BWP.

18. The method according to claim 15, wherein the target control resource set is a control resource set defined on the target BWP.

19. The method according to claim 1, wherein in a case that the terminal is a reduced capability terminal, and time division duplexing is used for a cell in which the terminal is located, transmission of data by the terminal meets any one of the following:
in a data transmission process, the terminal does not expect radio frequency retuning;
in a data transmission process, the terminal does not expect center frequencies of uplink sending and downlink reception to be inconsistent; and
in a data transmission process, the terminal expects center frequencies of uplink sending and downlink reception to be consistent.

20. A data receiving method, comprising:
performing, by a network side device, a first operation; and
receiving, by the network side device, target data from a terminal on a first bandwidth part BWP based on the first operation, wherein
the terminal is in an idle state or an inactive state, the first BWP is an initial uplink BWP configured by the network side device for a reduced capability terminal, and the first operation comprises at least one of the following:
mapping between a first synchronization signal block SSB and a configured grant physical uplink shared channel;
determining, based on a target object, whether a timing advance used by the configured grant physical uplink shared channel is valid, wherein the target object is a second SSB or a target tracking reference signal; and
determining a target control resource set used for sending the target data, wherein the target control resource set is a control resource set associated with dedicated search space used for monitoring a physical downlink control channel PDCCH.

21. The method according to claim 20, wherein the first SSB meets at least one of the following:
the first SSB is a cell defining SSB or a non-cell defining SSB; and
the first SSB is determined according to a first preset rule.

22. The method according to claim 21, wherein the first preset rule comprises at least one of the following:
determining the first SSB depending on whether the network side device configures to use a cell defining SSB;
determining the first SSB depending on whether the network side device configures to use a non-cell defining SSB;
determining the first SSB depending on whether the network side device configures a non-cell defining SSB on the first BWP; and
determining the first SSB depending on whether the network side device configures a first object on the first BWP, wherein
the first object comprises at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located .

23. The method according to claim 22, wherein in a case that the first preset rule comprises determining the first SSB depending on whether the network side device configures a non-cell defining SSB on the first BWP, the first SSB meets the following:
in a case that the non-cell defining SSB is configured on the first BWP, the first SSB is the non-cell defining SSB; or
in a case that the non-cell defining SSB is not configured on the first BWP, the first SSB is a cell defining SSB.

24. The method according to claim 22, wherein in a case that the first preset rule comprises determining the first SSB depending on whether the network side device configures a first object on the first BWP, the first SSB meets the following:
in a case that the first object is configured on the first BWP, the first SSB is a non-cell defining SSB; or
in a case that the first object is not configured on the first BWP, the first SSB is a cell defining SSB.

25. The method according to claim 20, wherein the second SSB meets at least one of the following:
the second SSB is a cell defining SSB or a non-cell defining SSB; and
the second SSB is determined according to a second preset rule.

26. The method according to claim 25, wherein the second preset rule comprises at least one of the following:
determining the second SSB depending on whether the network side device configures to use a cell defining SSB;
determining the second SSB depending on whether the network side device configures to use a non-cell defining SSB;
determining the second SSB depending on whether the network side device configures a non-cell defining SSB on the first BWP; and
determining the second SSB depending on whether the network side device configures a second object on the first BWP, wherein
the second object comprises at least one of the following: type 2 common search space CSS, type 2A CSS, CSS for terminal monitoring in which a PDCCH scrambled by a paging-radio network temporary identifier is located, and CSS for terminal monitoring in which a PDCCH scrambled by a paging early indication-radio network temporary identifier is located.

27. The method according to claim 26, wherein in a case that the second preset rule comprises determining the second SSB depending on whether the network side device configures a non-cell defining SSB on the first BWP, the second SSB meets the following:
in a case that the non-cell defining SSB is configured on the first BWP, the second SSB is the non-cell defining SSB; or
in a case that the non-cell defining SSB is not configured on the first BWP, the second SSB is a cell defining SSB.

28. The method according to claim 26, wherein in a case that the second preset rule comprises determining the second SSB depending on whether the network side device configures a second object on the first BWP, the second SSB meets the following:
in a case that the second object is configured on the first BWP, the second SSB is a non-cell defining SSB; or
in a case that the second object is not configured on the first BWP, the second SSB is a cell defining SSB.

29. The method according to claim 20, wherein the target tracking reference signal is a tracking reference signal configured by the network side device on the first BWP or a second BWP, and the second BWP is an initial uplink BWP configured by the network side device.

30. The method according to claim 29, wherein the target tracking reference signal is a tracking reference signal configured by the network side device on the first BWP or the second BWP for a terminal in an idle state or an inactive state.

31. The method according to claim 20, wherein the target control resource set meets at least one of the following:
the target control resource set is determined based on a type of the terminal, and the type of the terminal comprises a non-reduced capability terminal and a reduced capability terminal; and
the target control resource set is determined based on a target BWP, and the target BWP is a BWP on which the terminal is located before radio resource control is released, wherein
in a case that an index of a control resource set defined on the first BWP does not overlap with an index of a control resource set defined on a second BWP, the target control resource set is indicated by the network side device, and the second BWP is an initial uplink BWP configured by the network side device.

32. The method according to claim 31, wherein in a case that the target control resource set is determined based on a type of the terminal, the target control resource set meets at least one of the following:
in a case that the type of the terminal is a non-reduced capability terminal, the target control resource set is the control resource set defined on the second BWP; or
in a case that the type of the terminal is a reduced capability terminal, the target control resource set is the control resource set defined on the second BWP or the control resource set defined on the first BWP.

33. A data sending apparatus, comprising:
a first performing module, configured to perform a first operation; and
a sending module, configured to send, in a case that a data sending apparatus is in an idle state or an inactive state, target data on a first bandwidth part BWP based on the first operation, wherein
the first BWP is an initial uplink BWP configured by a network side device for a reduced capability terminal, and the first operation comprises at least one of the following:
mapping between a first synchronization signal block SSB and a configured grant physical uplink shared channel;
determining, based on a target object, whether a timing advance used by the configured grant physical uplink shared channel is valid, wherein the target object is a second SSB or a target tracking reference signal; and
determining a target control resource set used for sending the target data, wherein the target control resource set is a control resource set associated with dedicated search space used for monitoring a physical downlink control channel PDCCH.

34. A data receiving apparatus, comprising:
a second performing module, configured to perform a first operation; and
a receiving module, configured to receive target data from a terminal on a first bandwidth part BWP based on the first operation, wherein
the terminal is in an idle state or an inactive state, the first BWP is an initial uplink BWP configured by the network side device for a reduced capability terminal, and the first operation comprises at least one of the following:
mapping between a first synchronization signal block SSB and a configured grant physical uplink shared channel;
determining, based on a target object, whether a timing advance used by the configured grant physical uplink shared channel is valid, wherein the target object is a second SSB or a target tracking reference signal; and
determining a target control resource set used for sending the target data, wherein the target control resource set is a control resource set associated with dedicated search space used for monitoring a physical downlink control channel PDCCH.

35. A terminal, comprising a processor and a memory, wherein the memory stores a program or instructions that can run on the processor, and the program or the instructions, when being executed by the processor, implement the steps of the data sending method according to any one of claims 1 to 19.

36. A network side device, comprising a processor and a memory, wherein the memory stores a program or instructions that can run on the processor, and the program or the instructions, when being executed by the processor, implement the steps of the data receiving method according to any one of claims 20 to 32.

37. A readable storage medium, wherein the readable storage medium stores a program or instructions, and the program or the instructions, when being executed by a processor, implement the steps of the data sending method according to any one of claims 1 to 19 or the steps of the data receiving method according to any one of claims 20 to 32.
